Europäisches Patentamt

(19) European Patent Office

Office européen des brevets

(11) Publication number: **0 296 445**
**B1**

(12) **EUROPEAN PATENT SPECIFICATION**

(45) Date of publication of the patent specification:
**05.12.90**

(51) Int. Cl.⁵: **F16F 9/04, B60G 11/26**

(21) Application number: **88109400.7**

(22) Date of filing: **13.06.88**

(54) **Improvements to air springs.**

(30) Priority: **26.06.87 IT 2106287**

(43) Date of publication of application:
**28.12.88 Bulletin 88/52**

(45) Publication of the grant of the patent:
**05.12.90 Bulletin 90/49**

(84) Designated Contracting States:
**BE DE FR GB NL**

(56) References cited:
**FR-A- 2 543 889**
**GB-A- 809 568**
**GB-A- 1 248 025**
**US-A- 2 988 353**
**US-A- 4 506 910**

(73) Proprietor: **INDUSTRIE PIRELLI S.p.A., Piazzale Cadorna, 5, I-20123 Milan(IT)**

(72) Inventor: **Maffezzoli, Piero, Via della Torre 40, I-20127-Milan(IT)**

(74) Representative: **Giannesi, Pier Giovanni et al, Pirelli S.p.A. Direzione Brevetti Piazzale Cadorna, 5, I-20123 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention concerns some improvements in the air springs used in the suspensions of motorvehicles, trailers and the like, and more specifically it relates to some improvements concerning the resistant structure of the pistons intended to support said air springs.

As known, in its more general form an air spring is composed of an elastomeric diaphragm of cylindrical shape, whose ends are sealingly situated between a portion integral with the axle of a vehicle and a lower element called "piston".

The diaphragm inner volume is filled with a fluid under pressure and the piston takes in general the form of a cylindrical cup, flared at its bottom and closed at its top by a flat surface on which act the pressure variations of the fluid originated by the loads acting on the vehicle axle.

The lower portion of the piston is on its turn associated to a rigid plate, usually made of cast iron, fast with the shaft of the vehicle wheel.

The field of application of the present invention is directed to the piston of the air spring, namely to that part of the spring on which forces of very high entity, of the order of thousands of kilograms, are discharged

In the above cited field, the piston must be designed to withstand by fatigue a compression of pulsating type up to 6,000 kg, which is exerted by the inner pressure of the spring on its upper surface

Further, the piston structure must be able to support the load overlying it in the event of the spring burst. This critical situation takes place when the upper element of the spring bumps against the upper surface of the piston. Therefore, to resist to the bump, the piston must support a load which could be ranging - at least in some vehicles - between 15,000 and 20,000 kg.

The already known solutions, comprising for instance the use of plate, are satisfactory in some cases but do not prove quite reliable to ensure the elimination of collapses due to concentration of stresses in particular areas of the structure.

A greater resistance of the piston to fatigue,in the presence of heavier and heavier loads acting on the suspension,might be obtained by resorting to a greater amount of material, for example by increasing the thickness of its walls or by partially filling its inner cavity

However, this solution would originate a considerable increase in the unsprung masses of a motorvehicle, just when the present technical trend is that of lightening said masses, and would be in contrast with the still increasing utilization of the space inside the piston as auxiliary volume of the spring,for instance when it is wished to increase the amount of fluid under pressure contained in the diaphragm.

It could be thought to eliminate the above indicated disadvantages by resorting for instance to pistons made of plastic material and provided internally with appropriate ribs extending for the whole height of the piston. A piston with reinforcing ribs is shown in US-A 4 506 910.

Unfortunately, this solution, to respect the above indicated limits of weight and volume, could prove inadequate owing to the collapse of one of the ribs, due to buckling,and to the possible concentration of stresses in particular areas, with a subsequent stress relaxation.

Consequently, it is the aim of the present invention to provide a piston for air springs used in the suspension of vehicles, trailers and the like, able to improve the piston resistance to compression stresses, avoiding the occurrence of stresses concentrated on particular areas of the resistant structure and eliminating all of the above reported drawbacks.

Accordingly, the subject matter of the present invention is a piston for an air spring constituted by an elastomeric diaphragm of cylindrical shape having its ends situated between a portion integral with the axle of a vehicle and the piston, the diaphragm inner volume being filled by a fluid under pressure, the piston having the shape of a cylindrical cup flared at its bottom and closed at its top by a flat surface on which act the pressure variations of the fluid orginated by the loads acting on the vehicle axle, the piston lower portion being associated to a rigid plate fast with the vehicle axle, and the piston comprising in its interior reinforcing means characterized by the fact that the reinforcing means comprises a plurality of oxially extending flat ribs arranged in mutually opposed pairs with respect to a central and vertical axis of the piston, each rib being substantially delimited by two sides, perpendicular to each other, whose ends are connected by a third side, the first side being situated along the underside of the piston upper surface and the second being arranged along the inside of the piston lateral surface, the ribs being connected to one another by a cylindrical jacket, concentric to the piston lateral surface and joined to the piston upper surface, the jacket intersecting the ribs along lines parallel to the piston central axis, the jacket height being smaller than 50% of the piston height measured between the upper surface and the lower portion.

The present invention will be better understood with the aid of the following detailed description made by way of non-limiting example with reference to the attached sheets of drawings, in which :

FIGURE 1 - represents, in front view, the application of an air spring, with its piston, between the axle of a truck and a wheel

FIGURE 2 - shows an axial plane a piston according to the prior art;

FIGURE 3 - is a view from the bottom of the inside of a piston according to the invention;

FIGURE 4 - shows the piston of Figure 3 along line IV-IV; and

FIGURE 5 - shows a particular of the piston along line V-V of Figure 3.

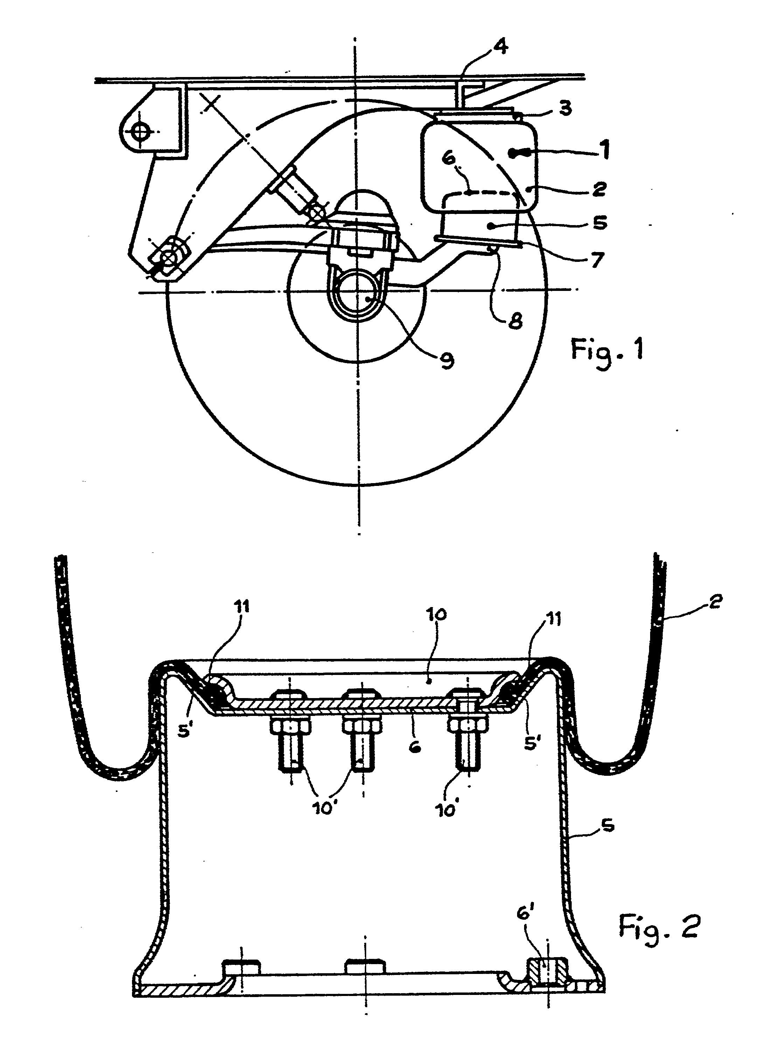

In FIG.1 the reference numeral indicates an air spring, making part of a suspension for trailers of industrial vehicles.

The air spring (1) is composed of a diaphragm(2) of elastomeric material, of cylindrical shape, whose ends are sealingly associated between a plate (3) fast with the axle (4) of a vehicle and a piston (5). As shown, the diaphragm inner volume is filled with a fluid under pressure.

Piston (5) comprises a container in the form of a cylindrical cup which is closed at its top by a flat surface (6) on which act the pressure variations of the fluid contained in the diaphragm and is flared at its bottom along a portion (7) associated on its turn to a rigid plate (8) of cast iron, integral with the vehicle wheel 9.

Fig.2 illustrates a piston of conventional type generally made of sheet, which comprises in its lower portion a plate welded to the lateral surface of the piston. The plate is provided with holes (6') for the passage of bolts intended to connect it with plate (8) of cast iron,integral with wheel (9) (FIG.1).

From FIG.2 it can also be noted that the lateral portion of piston (5) is turned upward by means of frusto-conical shoulders (5') to originate the upper flat portion (6) against which an appropriate metal small plate (10) is secured by bolts (10'); the beads (11) of diaphragm (2) are clamped between shoulders (5') and the edges of the small plate (10).

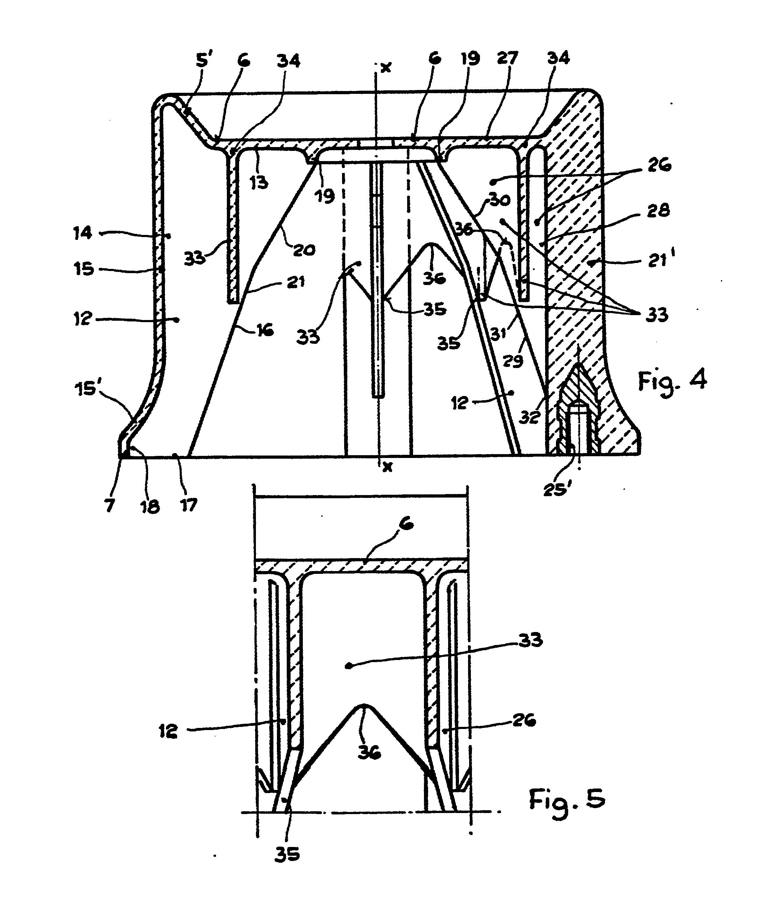

As it can be seen in FIG.4, the piston according to the invention has the same lateral and upper surface as that of FIG.2 and can have the same type of connection to diaphragm (2),which can be secured to the outer edge of the small disc (10) by vulcanization.

The lower surface (7) of piston (5) and the connection of said surface with plate (8) of cast iron differ from the solution shown in FIG.2, as it will be clearly explained herebelow.

In particular, the piston according to the present invention, instead of being made of sheet, can be preferably built up with plastic material and,still preferably, with a thermo-setting resin, as for instance a polyester resin, known on the market with the trade name SMC, appropriately reinforced with glass fibers.

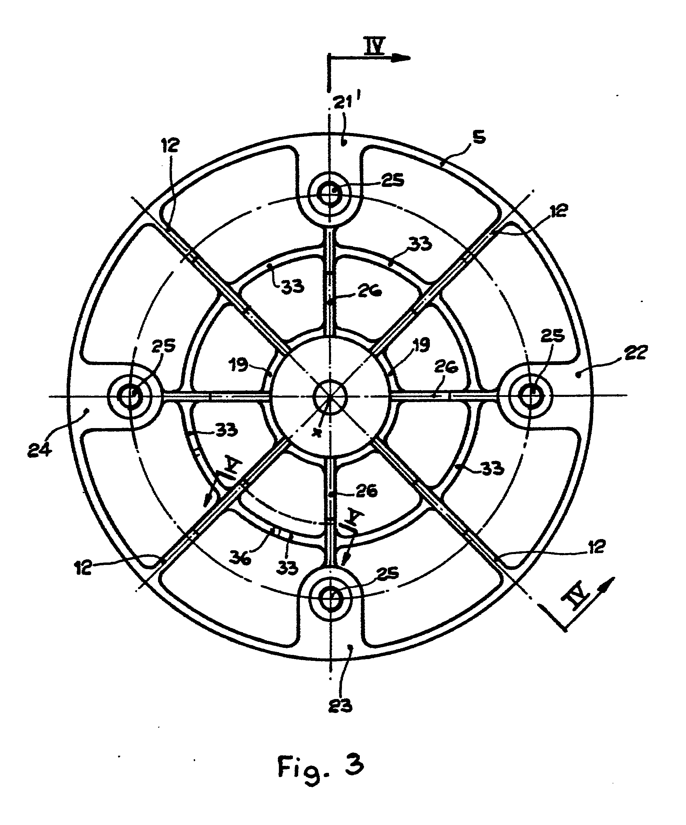

The main characteristics of the piston according to the invention concern its resistant structure and are brought into evidence in FIGS.3 and 4.

In particular, piston (5) comprises a plurality of flat ribs (12) (FIG.3) arranged in mutual opposition with respect to an axis X-X, central and vertical to the piston.

In its more general form, each rib is substantially delimited by two sides (13, 14), perpendicular to each other, connected at their ends by a third side (16); in this general solution the first side is situated along the upper surface in radial position and the second side is arranged along the piston lateral surface according to a generatrix of the cylinder forming the piston.

In the preferred embodiment, shown in the left part of FIG.4, each rib (12) comprises a first side (13) directed in radial position along the upper surface to occupy subsequently the portion internal to the groove defined by shoulders (5'), a second side (14) directed along the lateral surface (15) of the piston and the flared section (15'), a third side (16) connecting the end of the first side (13) with an edge (17) intended to support the piston portion provided with the rigid plate (8) made of cast iron (not shown in this figure). The supporting edge (17) protrudes radially inwardly with respect to end (18) of the second side (14) of rib (12).

Still in the embodiment illustrated in the left part of FIG.4, the first sides (13) of the ribs converge towards a circumferential ridge (19) of the piston upper surface; the circumferential ridge is defined by a diameter substantially equal to 30% of the diameter of the cylindrical lateral surface of the piston.

In the above described embodiment, the third side (16) of the rib is preferably constituted by rectilinear segments (20,21), forming together an angle of about 170°. The two segments are conveniently radiused to each other

The piston is moreover characterized in that it comprises a plurality of uprights formed by columns (21',22, 23,24) alternated to the above described ribs (12). Each column protrudes from the piston lateral surface with two rectilinear portions connected together by a circular surface.

Further, the columns are in mutual opposition with respect to the central and vertical axis of the piston and each column comprises in its inside a threaded seat (25) to receive a bolt intended to secure the piston to the underlying plate (8) of cast iron, in turn associated to wheel (9) (FIG.1).

Preferably, each upright extends for the whole lateral inner surface of the piston. Still in the preferred embodiment, each upright comprises a flat rib (26) situated along a plane axial to the piston and defined by two sides, perpendicular to each other, (27,28), connected by a third side (29).

The first side (27) of rib (26) is arranged in radial position on the piston upper surface, whilst the second side runs along the upright in a position parallel to the piston vertical axis.

As it can be noted from the example of FIG.4, the ends of the first sides (27) are situated along a circumferential ridge (19), and the second and third side of rib (26) meet at a point (32) of the upright distant from the piston lower surface. Further, preferably, the third side (29) of rib (26) is composed of two rectilinear segments (30,31) forming together an angle of about 170°. The segments are conveniently radiused to each other

A further main characteristic of the present invention is the presence, inside the piston, of at least a cylindrical jacket (33) connecting all the ribs together.

Jacket (33) is concentric to the piston lateral surface and has its own supporting base on the piston upper surface. Moreover, the jacket intersects the ribs along lines parallel to the piston central axis and has a height smaller than 50% of the height of the piston measured between its upper surface and its lower portion. For instance, the jacket height ranges between 30% and 45% of the piston height.

Jacket (33) intersects the piston upper surface along a circumferential line (34) which substantially bisects the sides (13) of the ribs (12) and the sides (27) of the ribs (26).

In the described solution the thicknesses of the cylinder lateral wall, the upper surface, the ribs and the jacket are substantially equal, ranging for instance between 4 and 5 mm.

A further preferred solution concerns a jacket delimited along its lower edge by a broken line and more precisely by a plurality of peaks (35) alternated to recesses (36), the peaks being corresponding to the ribs and the recesses being in an intermediate position between adjacent ribs.

The invention reaches all the purposes it aimed at.

In fact, the combination of the chief characteristics concerning the plurality of ribs, all connected together by a cylindrical jacket, ensures the stability of said ribs under load and a uniform distribution of the stresses in the whole material forming the piston, with a consequent long life of the resistant structure.

In the practice, if the thrust exerted by the air spring is schematically represented, for the sake of simplicity, as a force applied downward at the center of the piston upper surface, it can be seen that said force, among its various components in all directions along the rib, comprises a maximum component along the line joining the ends of the first and of the second side of each rib.

According to said schematic representation, the rib would behave as a rod subjected to buckling, in particular along the cited direction.

The presence of the jacket, which divides each rib into two sections, reduces the height subjected to flexion, avoiding consequently a collapse of the rib or an excessive mutual approach between adjacent ribs, originated by their "belly"; if the jacket were not provided, these circumstances might take place.

Moreover, the presence of a cylindrical jacket,whose height is limited to the above cited values,allows an enlargement of the zones which may be deformed under load, so that the piston comprises wide deformable areas and a concentration of stresses in localized parts of the resistant structure is avoided.

In fact, if the jacket should have a height greater than that indicated above, high concentration of stresses might be ascertained in the ribs portion immediately underlying the jacket.

An explanation of this negative situation is not possible, since the involved phenomena are very complicated and not quite clear. A reasonable hypothesis which could be made, at least approximately, is that the jacket stiffness is variable according to the height of the latter, that is that it increases by progressively increasing said height.

When the jacket's height is greater than that indicated, in some circumstances there would be an insufficient cooperation of all the piston zones to the resistance of the structure. Substantially, in this case, the central ribs and the jacket, owing to an excessive stiffness of the latter, would not deform or would deform in a limited extent, allowing the stresses, exerted from the top towards the piston lower portion, to pass only through the jacket lower edge, and originating therefore a concentration of stresses in the rib portion immediately underlying the jacket lower edge.

This hypothesis seems to be confirmed by the fact that, by reducing the jacket height, for instance between 35% and 45% of the piston height, a satisfactory and substantially uniform distribution of the stresses on the ribs underlying the jacket lower edge can be obtained.

Also, it can be reasonably deemed that a greater deformability of the jacket, with respect to the above case, gives rise to a greater deformability of the ribs situated in higher position on the piston and of the rib portions in contact with the jacket and beyond it, towards the piston lateral surface, practically to a greater extension of the deformable areas, with the consequent elimination of concentrated stresses in the above indicated points.

The reliability of the above explanations seems to be further confirmed when the preferred embodiment of the invention is adopted, namely when the jacket lower edge is delimited by a line comprising lower points (35) at the zones of contact with the ribs, and higher points (36) (FIG. 4) in the intermediate sections between adjacent ribs.

This solution, owing to the lack of material in the jacket lateral portions, at recesses (36), imparts a greater deformability to the jacket, with a correspondingly improved distribution of the stresses on wider areas of the ribs and a consequent attenuation of the stresses' highest values.

In the same embodiment, the feature of imparting higher values to the jacket height at the zones of connection to the ribs, gives rise to an advantageous division of each rib into two sections - liable to be subjected to flexion under buckling - whose height is limited and anyhow is such as to prevent collapse of one or of both sections.

In particular, said solution originates a reduction in the mass of the jacket, with a relevant advantage as regards the piston lightness.

A further feature, able to avoid concentrated stresses, is that concerning a jacket whose thickness is lesser than that of the ribs.

Further features of the invention, useful in view of a reduction of the risk of localized concentration of stresses,are those according to which the profiles of the innermost sides of the piston have a parabolic path or comprise two rectilinear lengths approximately resulting as said parabolic profile.

The path of these profiles, as regards the ribs, involves in particular an improved ratio between the rib and the upright, preventing the occurrence of high stresses on the rib base.

Furthermore, for the purposes of the present invention, a considerable improvement is represented by the preferr ed embodiment in which the piston is made of thermosetting material, as for instance of a polyester resin, reinforced with glass fibers.

In fact this solution affords all of the above mentioned advantages, in combination with a weight substantially smaller with respect to that of the metallic materials normally used in other solutions, so that the unsprung masses in a motorvehicle, as required by the present technique, are reduced in a large extent.

## Claims

1. A piston (5) for an air spring (1) constituted by an elastomeric diaphragm (2) of cylindrical shape having its ends situated between a portion (3) integral with the axle (4) of a vehicle and the piston (5), the diaphragm inner volume being filled with a fluid under pressure, the piston having the shape of a cylindrical cup flared at its bottom and closed at its top by a flat surface (6) on which act the pressure variations of the fluid originated by the loads acting on the vehicle axle, the piston lower portion (7) being associated to a rigid plate (8) fast with the vehicle wheel (9) and the piston comprising in its interior reinforcing means, characterized in that the reinforcing means comprises a plurality of axially extending flat ribs (12) arranged in mutually opposed pairs with respect to a central and vertical axis of the piston, each rib (12) being substantially delimited by two sides (13, 14), perpendicular to each other, whose ends are connected by a third side (16), the first side (13) being situated along the underside of the piston upper surface and the second side (14) being arranged along the inside of the piston lateral surface, the ribs being connected to one another by a cylindrical jacket (33), concentric to the piston lateral surface and joined to the piston upper surface, the jacket intersecting the ribs along lines parallel to the piston central axis, the jacket height being smaller than 50% of the piston height measured between the upper surface and the lower portion.

2. A piston according to Claim 1, characterized by the fact that the lower end of the third side (16) of each rib is connected to the end of the second side of the same rib by an edge (17) which engages the fastening plate (8).

3. A piston according to Claims 1 or 2, characterized by the fact that the inner ends of the first sides of the ribs are arranged along a circumferential ridge (19) provided on the underside of the piston surface and defined by a diameter equal to 30% of the diameter of the piston cylindrical lateral surface.

4. A piston according to Claim 1, characterized by the fact that the lateral jacket intersects the piston upper surface along a circumferential line (34) which substantially bisects the first sides (13) of the ribs (12).

5. A piston according to Claim 1, characterized by the fact that the thickness of the jacket is smaller than that of the ribs.

6. A piston according to Claim 1, characterized by the fact that the lower end of the jacket is delimited by a line formed by a plurality of peaks (35) alternated to recesses (36), the peaks being corresponding to the ribs and the recesses being in an intermediate position between adjacent ribs.

7. A piston according to any one of the previous Claims, characterized by the fact that it comprises a plurality of uprights (21', 22, 23, 24) formed by inner columns situated on the piston lateral surface, said columns being in mutually opposed pairs with respect to the central and vertical axis of the piston, each upright being in a radially external position with respect to the jacket.

8. A piston according to Claim 7, characterized by the fact that each upright extends in height for the whole lateral inner surface of the piston.

9. A piston according to Claims 7 or 8, characterized by the fact that each upright comprises a threaded seat (25) intended to receive a bolt able to secure the piston to the rigid plate (8).

10. A piston according to any one of Claims 7 to 9, characterized by the fact that each upright comprises a flat rib (26) situated along planes axial to the piston, the rib comprising two sides (27, 28), perpendicular to each other and connected by a third side (29), the first side (27) being arranged along the underside of the piston upper surface and the second side (28) along said upright.

11. A piston according to Claim 10, characterized by the fact that the second and the third side of the rib (26) meet at a point (32) of the upright spaced from the piston lower surface.

12. A piston according to Claim 1, characterized by the fact that the profile forming the third side of each rib is curvilinear and concave towards the piston inside.

13. A piston according to Claim 12, characterized by the fact that said curvilinear profile is a portion of an arc of a parabola.

14. A piston according to Claim 1, characterized by the fact that the rib profile connecting the piston upper surface to the lateral surface is formed by two rectilinear segments (30, 31) radiused to each other.

15. A piston according to any one of the previous Claims, characterized by the fact that it is made of a fiber-reinforced plastic material.

16. A piston according to Claim 15, characterized by the fact that it is made of polyester resin reinforced with glass fibers.

## Patentansprüche

1. Kolben (5) für eine Luftfeder (1), die dargestellt ist durch eine elastomere Membran (2) zylindrischer Gestalt, deren Enden zwischen einem Teil (3), der mit der Achse (4) eines Fahrzeuges einheitlich ist, und dem Kolben (5) liegen, wobei das innere Volumen der Membran mit einem unter Druck befindlichen Fluid gefüllt ist, der Kolben die Gestalt eines zylindrischen Bechers hat, der an seinem Unterende erweitert und an seinem Oberende durch eine ebene Fläche (6) geschlossen ist, auf welche die Druckänderungen des Fluids wirken, hervorgerufen durch auf die Fahrzeugachse wirkende Belastungen, der untere Teil (7) des Kolbens einer starren Platte (8) zugeordnet ist, die an dem Fahrzeugrad (9) befestigt ist, und wobei der Kolben in seinem Inneren Verstärkungsmittel aufweist, dadurch gekennzeichnet, daß die Verstärkungsmittel eine Mehrzahl von sich axial erstreckenden ebenen Rippen (12) umfassen, die in wechselseitig gegenüberliegenden Paaren mit Bezug auf eine mittlere und vertikale Achse des Kolbens angeordnet sind, jede Rippe (12) im wesentlichen durch zwei Seiten (13, 14), die rechtwinkelig zueinander verlaufen, begrenzt ist, deren Enden durch eine dritte Seite (16) verbunden sind, wobei die erste Seite (13) entlang der Unterseite der oberen Fläche des Kolbens liegt und die zweite Seite (14) entlang der Innenseite der Seitenfläche des Kolbens angeordnet ist, die Rippen miteinander durch einen zylindrischen Mantel (33) verbunden sind, der zur Seitenfläche des Kolbens konzentrisch liegt und mit der oberen Fläche des Kolbens verbunden ist sowie die Rippen entlang von Linien parallel zur Mittelachse des Kolbens schneidet, und wobei die Höhe des Mantels kleiner als 50% der Höhe des Kolbens ist, gemessen zwischen der oberen Fläche und dem unteren Teil.

2. Kolben nach Anspruch 1, dadurch gekennzeichnet, daß das untere Ende der dritten Seite (16) jeder Rippe mit dem Ende der zweiten Seite derselben Rippe durch eine Kante (17) verbunden ist, welche mit der Befestigungsplatte (8) in Eingriff tritt.

3. Kolben nach Anspruch 1 oder 2, dadurch gekennzeichnet, daß die inneren Enden der ersten Seiten der Rippe entlang einer Umfangsrippe (19) angeordnet sind, die an der Unterseite der Kolbenfläche vorgesehen und durch einen Durchmesser definiert ist, der gleich 30% des Durchmessers der zylindrischen Seitenfläche des Kolbens ist.

4. Kolben nach Anspruch 1, dadurch gekennzeichnet, daß der seitliche Mantel die obere Fläche des Kolbens entlang einer Umfangslinie (34) schneidet, welche die ersten Seiten (13) der Rippen (12) im wesentlichen in zwei Hälften teilt.

5. Kolben nach Anspruch 1, dadurch gekennzeichnet, daß die Dicke des Mantels kleiner als diejenige der Rippen ist.

6. Kolben nach Anspruch 1, dadurch gekennzeichnet, daß das untere Ende des Mantels durch eine Linie begrenzt ist, welche durch eine Mehrzahl von Spitzen gebildet ist, die sich mit Ausnehmungen (36) abwechseln, wobei die Spitzen den Rippen entsprechen und die Ausnehmungen sich in einer Zwischenposition zwischen benachbarten Rippen befinden.

7. Kolben nach irgendeinem der vorhergehenden Ansprüche, dadurch gekennzeichnet, daß er eine Mehrzahl von Stützen (21', 22, 23, 24) umfaßt, die durch innere Säulen gebildet sind, welche sich an der Seitenfläche des Kolbens befinden und welchen wechselseitig gegenüberliegenden Paaren mit Bezug auf die mittlere und vertikale Achse des Kolbens vorgesehen sind, wobei jede Stütze sich mit Bezug auf den Mantel in einer radial äußeren Position befindet.

8. Kolben nach Anspruch 7, dadurch gekennzeichnet, daß jede Stütze sich in ihrer Höhe über die gesamte seitliche Innenfläche des Kolbens erstreckt.

9. Kolben nach Anspruch 7 oder 8, dadurch gekennzeichnet, daß jede Stütze einen Gewindesitz (25) umfaßt, der zur Aufnahme eines Bolzens vorgesehen ist, welcher den Kolben an der starren Platte (8) befestigen kann.

10. Kolben nach irgendeinem der Ansprüche 7 bis 9, dadurch gekennzeichnet, daß jede Stütze eine ebene Rippe (26) umfaßt, die entlang von Ebenen axial zum Kolben vorgesehen ist und zwei Seiten (27, 28) umfaßt, die rechtwinkelig zueinander liegen und durch eine dritte Seite (29) verbunden sind, wobei die erste Seite (27) entlang der Unterseite der oberen Fläche des Kolbens, und die zweite Seite (28) entlang der Stütze angeordnet ist.

11. Kolben nach Anspruch 10, dadurch gekennzeichnet, daß die zweite und die dritte Seite der Rippe (26) sich an einer Stelle (32) der Stütze treffen, die in einem Abstand von der unteren Fläche des Kolbens liegt.

12. Kolben nach Anspruch 1, dadurch gekennzeichnet, daß das die dritte Seite jeder Rippe bildende Profil gekrümmt und konkav in Richtung gegen die Innenseite des Kolbens ist.

13. Kolben nach Anspruch 12, dadurch gekennzeichnet, daß das gekrümmte Profil ein Teil eines Parabelbogens ist.

14. Kolben nach Anspruch 1, dadurch gekennzeichnet, daß das Rippenprofil, welches die obere Fläche des Kolbens mit der Seitenfläche verbindet, durch zwei geradlinige Segmente (30, 31) gebildet ist, die über einen Radius miteinander verbunden sind.

15. Kolben nach irgendeinem der vorhergehenden Ansprüche, dadurch gekennzeichnet, daß er aus faserverstärktem Kunststoffmaterial gebildet ist.

16. Kolben nach Anspruch 15, dadurch gekennzeichnet, daß er aus Polyesterharz gebildet ist, welches mit Glasfasern verstärkt ist.

**Revendications**

1. Piston (5) pour un ressort pneumatique (1), constitué par un diaphragme (2) en élastomère de forme cylindrique dont les extrémités sont situées entre une partie (3) d'un seul tenant avec l'essieu (4) d'un véhicule et le piston (5), le volume intérieur du diaphragme étant rempli d'un fluide sous pression, le piston ayant la forme d'une coupelle cylindrique évasée en bas et fermée en haut par une paroi plane (6), sur laquelle agissent les variations de pression du fluide ducs aux charges exercées sur l'essieu du véhicule, la partie inférieure (7) du piston étant coordonnée à une plaque rigide (8) solidaire d'un support de roue (9) du véhicule et le piston comprenant intérieurement un moyen de renforcement, caractérisé en ce que le moyen de renforcement comprend une pluralité de nervures plates (12) orientées axialement, disposées par paires de nervures mutuellement opposées par rapport à un axe central et vertical du piston, chaque nervure (12) étant essentiellement délimité par deux côtés (13, 14) perpendiculaires entre eux, dont les extrémités sont reliées l'une à l'autre par un troisième côté (16), le premier côté (13) s'étendant le long du dessous de la paroi supérieure du piston et le deuxième côté (14) s'étendant le long du côté interne de la paroi latérale du piston, les nervures étant reliées entre elles par une jupe cylindrique (33) concentrique à la paroi latérale du piston et réunie à la paroi supérieure du piston, la jupe intersectant les nervures suivant des lignes parallèles à l'axe central du piston et la hauteur de la jupe étant inférieure à 50% de la hauteur du piston mesurée entre la paroi supérieure et la partie inférieure du piston.

2. PIston selon la revendication 1, caractérisé par le fait que l'extrémité inférieur du troisième côté (16) de chaque nervure se raccorde à l'extrémité du deuxième côté de la même nervure par un bord (17) qui est appliqué contre la plaque de fixation (8).

3. Piston selon la revendication 1 ou 2, caractérisé par le fait que les extrémités intérieures des premiers côtés des nervures sont disposées sur un renflement circonférentiel (19) formé sur le dessous de la paroi supérieure du piston et ayant un diamètre correspondant à 30% du diamètre de la paroi latérale cylindrique du piston.

4. Piston selon la revendication 1, caractérisé par le fait que la jupe latérale rejoint la paroi supérieure du piston le long d'une ligne circonférentielle (34) qui divise sensiblement en deux parties égales les premiers côtés (13) des nervures (12).

5. Piston selon la revendication 1, caractérisé par le fait que l'épaisseur de la jupe est inférieure à celle des nervures.

6. Piston selon la revendication 1, caractérisé par le fait que l'extrémité inférieure de la jupe est délimitée par une ligne constituée d'une pluralité de pointes saillantes (35) alternant avec des creux (36), les pointes saillantes correspondant aux nervures et les creux étant situés chacun entre deux nervures voisines.

7. Piston selon l'une quelconque des revendications précédentes, caractérisé par le fait qu'il comprend une pluralité de montants (21', 22, 23, 24) formés par des colonnes internes situées sur la paroi latérale du piston et constituant des paires de colonnes mutuellement opposées par rapport à l'axe central vertical du piston, chaque montant étant situé radialement à l'extérieur de la jupe.

8. Piston selon la revendication 7, caractérisé par le fait que chaque montant s'étend sur toute la hauteur du côté interne de la paroi latérale du piston.

9. Piston selon la revendication 7 ou 8, caractérisé par le fait que chaque montant comporte un trout araudé (25') destiné à recevoir une vis pour la fixation du piston à la plaque rigide (8).

10. Piston selon l'une quelconque des revendications 7 à 9, caractérisé par le fait que chaque montant comprend en outre une nervure plate (26) située dans un plan axial du piston et possédant deux côtés (27, 28) perpendiculaires entre eux et reliés l'un à l'autre par un troisième côté (29), le premier côté (27) s'étendant sur le dessous de la paroi supérieure du piston et le deuxième côté (28) s'étendant le long de la colonne correspondante.

11. Piston selon la revendication 10, caractérisé par le fait que les deuxième et troisième côtés de la nervure (26) se joignent en un point (32) du montant situé à distance de la face inférieure du piston.

12. Piston selon la revendication 1, caractérisé par le fait que le troisième côté de chaque nervure possède un profil curviligne dirigeant sa concavité vers le côté intérieur de la paroi latérale du piston.

13. Piston selon la revendication 12, caractérisé par le fait que le profil curviligne est une partie d'une parabole.

14. Piston selon la revendication 1, caractérisé par le fait que le profil du côté de la nervure reliant la paroi supérieure du piston à sa paroi latérale, est formé par deux segments droits (30, 31) qui se raccordent l'un à l'autre suivant un arrondi.

15. Piston selon l'une quelconque des revendications précédentes, caractérisé par le fait qu'il est fabriqué d'un matériau plastique renforcé par des fibres.

16. Piston selon la revendication 15, caractérisé par le fait qu'il est fabriqué d'une résine polyester renforcée aux fibres de verre.

EP 0 296 445 B1

Fig. 1

Fig. 2

Fig. 3

Fig. 4

Fig. 5